# EUROPEAN PATENT APPLICATION

(11) **EP 3 009 246 A1**
(43) Date of publication of application: **20.04.2016**
(21) Application number: 14306646.2
(22) Date of filing: 16.10.2014
(51) Int. Cl.: B29B 11/14, B29C 49/06

(54) **Preform having a variable thickness around a main axis**

(71) Applicant: SIDEL PARTICIPATIONS, 76930 Octeville-sur-Mer (FR)
(72) Inventor: Bunel, Christophe, 76930 OCTEVILLE SUR MER (FR)
(74) Representative: Louiset, Raphaël

(57) **Abstract**

Preform **(1)** made of a plastic material for the manufacturing of a container **(2)** by blow molding or stretch-blow molding, said preform **(1)** comprising a sidewall **(20)** extending along a main axis **(Z),** an open neck **(4)** and a substantially hemispherical closed bottom **(21)** having a thickness **(T)** which varies at least locally around the main axis **(Z).**

## Description

### FIELD OF THE INVENTION

The invention generally relates to the manufacturing of containers, such as bottles, which are produced by blow molding or stretch-blow molding from preforms made of a plastic material (such as PET). More specifically, the invention relates to a preform for the manufacturing of a container.

### BACKGROUND OF THE INVENTION

A conventional preform, which is generally injected molded but might also be compression molded, is comprised of an open cylindrical threaded upper portion or neck, which terminates at a lower end in an annular protrusion, forming a support collar (used to carry the perform and the container at different steps of the manufacturing and packaging processes), a wall portion of generally cylindrical shape, which extends below the support collar, and a closed rounded bottom portion which extends below the wall portion.

During a conventional blow molding process, the preform undergoes both an axial (or length) stretch and a radial (or hoop) stretch to form the container. The combined length and hoop stretch provides molecular bi-orientation to the material, whereby the final container has good structural rigidity, generally sufficient to resist mechanical stresses due to the hydrostatic pressure of the liquid therein.

During the blow molding process, the neck of the preform remains unchanged, whereas both the wall and bottom are stretched and result respectively in a container wall portion and container bottom.

European patent application EP 2 711 152 (Sidel Participations) discloses a preform and a method of manufacturing a hot-fill container, wherein the container has an invertible diaphragm designed to be mechanically pushed upwards (i.e. inwards with respect of the container) after the container has been filled, capped and cooled down, in order to compensate for the vacuum generated by the cooling of the product.

In practice, inversion of the diaphragm is rather difficult and requires an important effort to be applied on the container bottom. In order to facilitate inversion of the diaphragm, it is proposed in the above-mentioned patent application to provide a smaller (and constant) wall thickness in a central region of the preform bottom.

However, tests conducted on a container made from such a preform revealed that the effort to be applied on the container bottom to achieve inversion of the diaphragm is still important and therefore requires a large mechanical pusher to be mounted along the container manufacturing line.

### SUMMARY OF THE INVENTION

It is therefore a purpose of the invention to provide a solution to facilitate inversion of the diaphragm.

It is another purpose of the invention to propose a preform having an enhanced design which, when blown into a container provided with an invertible diaphragm, facilitates inversion thereof.

The invention therefore provides a preform made of a plastic material for the manufacturing of a container by blow molding or stretch-blow molding, said preform comprising a sidewall extending along a main axis, an open neck and a substantially hemispherical closed bottom, the bottom having a thickness which varies at least locally around the main axis.

When the preform is blown into a container provided with an invertible diaphragm, the bottom of varying thickness gives birth, on the container, to a diaphragm with a mechanical resistance varying around the axis, which facilitates inversion thereof.

According to various embodiments, taken either separately or in combination:
- the bottom has a thinner zone located within a limited angular sector around the main axis;
- the angular sector has an angle comprised between 45° and 180°;
- the angular sector has an angle comprised between 90° and 150°;
- the preform has on the bottom, outside the thinner zone, a thickness T1 and, in the thinner zone, a minimum thickness T2 such that T2 ≤ 0.9·T1;
- the minimum thickness T2 in the thinner zone is such that T2 ≥ 0.6·T1;
- the thinner zone extends substantially along an arc of a circle having its center on the main axis;
- the thinner zone extends at substantially equal distance between the main axis and the junction between the sidewall and the bottom, when measured in a curvilinear manner along a meridian of the bottom.

The above and other objects and advantages of the invention will become apparent from the detailed description of preferred embodiments, considered in conjunction with the accompanying drawings.

### BRIEF DESCRIPTION OF THE DRAWINGS

**FIG.1** is a sectional view showing a preform provided with a bottom including a thinner zone.
**FIG.2** is an enlarged sectional view of the bottom of the preform, corresponding to the detail II of **FIG.1****.**
**FIG.3** is a top planar view of the preform of **FIG.1****.**
**FIG.4** is a diagram where a curve is plotted, showing variations of thickness of the preform bottom around its main axis.
**FIG.5** is a sectional view of a blow mold for manufacturing a hot-fill container provided with a high standing ring and an invertible diaphragm, and showing in dotted line a preform from which the container is formed.
**FIG.6** is a sectional view of the container, showing in dashed line a preform from which the container is formed.
**FIG.7** is a detail sectional view of the container, showing in continuous line the diaphragm at the beginning of its inversion and, in dotted line, the diaphragm in an inverted position.

### DETAILED DESCRIPTION

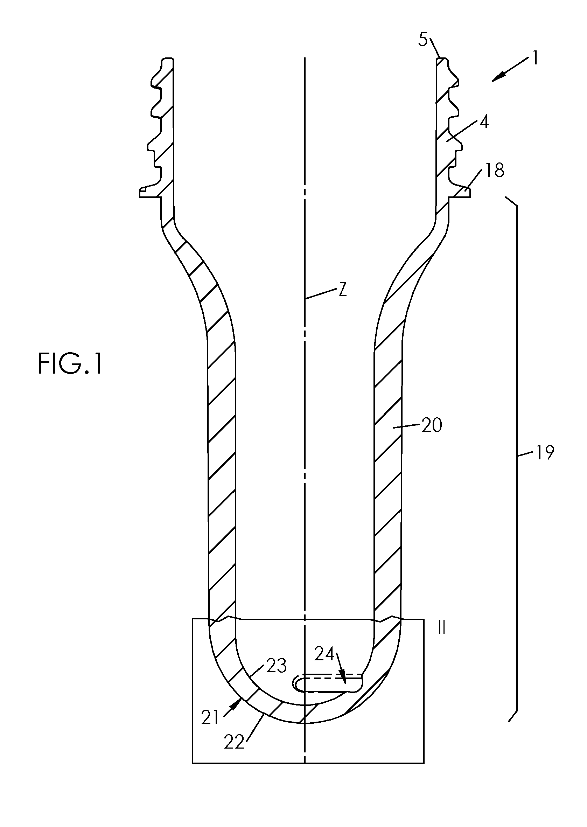

Shown on **FIG.1** is a preform **1** from which a container **2** such as a bottle is to be formed by blow molding or stretch blow molding within a mold **3.**

The container **2** includes an open cylindrical threaded upper portion or neck **4,** which terminates, at an upper end thereof, by an opening or mouth **5.** Below the neck **4,** the container **2** includes a shoulder **6** of increasing diameter in a direction opposite to the neck **4.**

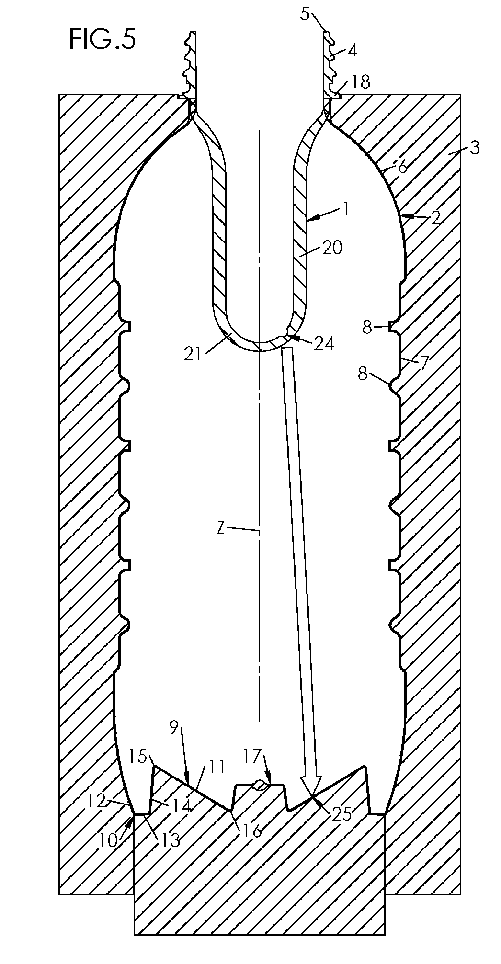

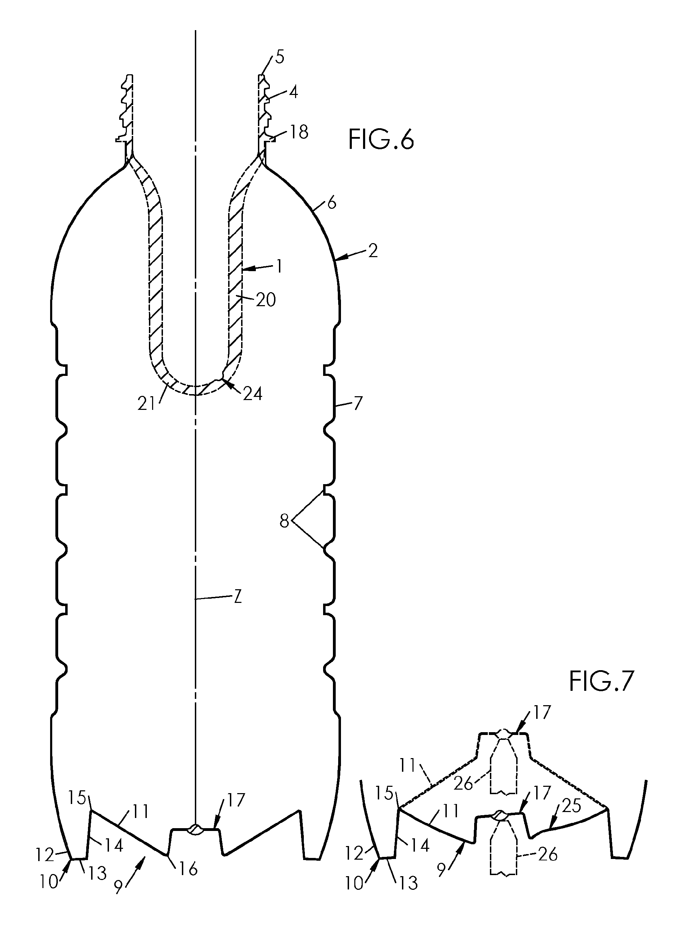

Below the shoulder **6,** the container **2** has a sidewall **7** which is substantially cylindrical around a container main axis **Z.** The sidewall **7** may, as depicted in **FIG.5** and **FIG.6****,** include annular stiffening ribs **8** capable of resisting thermal and mechanical stresses undergone by the container 2 during filling, capping and subsequent handling.

At a lower end of the sidewall **7,** the container **2** has a base **9** which closes the container **2** and allows it to be normally put on a planar surface such as a table when used by a final customer.

The container base **9** includes a standing ring **10,** which may be a high standing ring as it will be explained later, and a central invertible diaphragm **11,** which has a symmetry around the main axis **Z** and is deformable with respect to the sidewall 7 between an outwardly-inclined (or lower) position shown on **FIG.5** and **FIG.6****,** wherein the diaphragm **11** projects outwardly with respect to the container 2, and an inwardly-inclined (or upper) position, shown in dotted line on **FIG.7****,** wherein the diaphragm **11** projects inwardly with respect to the container **2.**

The container **2** is blow molded with the diaphragm **11** in its lower position. As will be explained in further details below, the diaphragm **11** is capable of being mechanically forced upwards (i.e. inwards with respect to the container **2)** after the container **2** has been filled with a pourable product, capped and cooled down, in order to compensate for the vacuum generated by the cooling of the product and to increase the overall rigidity of the filled container **2,** for the benefits of container handling and customer quality perception.

The standing ring **10** connects to the sidewall **7** of the container **2** at a lower end portion **12** thereof. The standing ring **10** has a support flange **13,** which is adjacent and substantially perpendicular to the lower end portion **12** of the sidewall **7,** and a cylindrical or frustoconical inner portion **14** which connects the support flange **13** to the diaphragm **11.** The support flange **13** is also substantially perpendicular to the container main axis **Z.**

In a preferred embodiment, the lower end portion **12** of the sidewall **7** has, when viewed in transversal section as shown on **FIG.5** and **FIG.6****,** the shape of an arch with a concavity turned inward with respect to the container **2,** whereby the outer diameter of the support flange **13** is smaller than the overall diameter of the sidewall **7.**

As depicted, the inner portion **14** preferably has the shape of a frustum of a cone and, when viewed in transversal section as shown on **FIG.6****,** inclines inwardly with respect to the container **2,** with a draft angle.

The cone shape of the inner portion **14** provides a vault stiffening and locking function to the diaphragm **11** in its inverted position, whereby the restriction of diameter of the inner portion **14** at its junction with the diaphragm **11** prevents the latter to articulate back from its inverted position with respect to the inner portion **14.** As a result, re-inversion of the diaphragm **11** back to its initial outwardly-inclined position under the mere hydrostatic pressure of the poured product is prevented.

In the depicted example, the inner portion **14** has an axial extension, which is important with respect to the outer diameter of the support flange **13,** hence the expression "high standing ring" to name the standing ring **10.** More specifically, the axial extension (or height) of the inner portion **14** is greater than 1/10 of the outer diameter of the support flange **13,** and preferably comprised between 1/10 and 1/5 of the outer diameter of the support flange **13.**

In the blown (and filled) configuration of the container **2** depicted on **FIG.5** and **FIG.6****,** the invertible diaphragm **11** extends outwards in a frusto-conical shape from a outer edge **15** where the diaphragm **11** connects to an upper end of the inner portion **14,** to an inner edge **16** where the diaphragm **11** connects to a central upwardly protruding recess or pushup **17.** The geometric center of the recess **17** is located on the container main axis **Z.**

Also in the blown configuration of the container **2,** the axial extension, or height, of the diaphragm **11,** is such that the inner edge **16** of the diaphragm **11** extends slightly above a support plane defined at the junction between the support flange **13** and the lower end portion **12** of the sidewall **7.** In other words, the height of the diaphragm **11** is slightly lower than the height of the high standing ring **10.**

After the container **2** has been blow molded, it is filled through its opening **5** with a (possibly hot) pourable product, the diaphragm 11 remaining in its lower position.

Then the container **2** is closed at its neck **4** with a cap which is forced down and screwed onto the neck **4.**

The filled and capped container **2** may then undergo a cooling step for recovering an average atmospheric temperature, e.g. of about 20°C.

Then, the container **2** is submitted to a diaphragm inversion, whereby the diaphragm **11** is moved from its lower position to its upper position.

Diaphragm inversion is conducted by a container processing machine which may be a stand-alone machine but which, in a preferred embodiment, is part of a container labeling machine configured for applying a label on the sidewall **7** of each container **2.**

The preform **1** is made by injection or compression molding from a single plastic material, preferably PET (polyethylene terephthalate).

The preform **1** comprises:
- an open neck **4** (which is subject to no or little dimensional variations during the blowing and is therefore identical to the neck **4** of the subsequent container **2),**
- a support collar **18** at a lower end of the neck **4,**
- below the collar **18,** a body **19** which includes a substantially cylindrical sidewall **20** extending along the same main axis **Z** as the container **2** (unchanged during blowing) and, at a lower end of the sidewall **20,** a substantially hemispherical closed bottom **21** which terminates the preform **1** at a lower side opposite the neck **4.**

In its sidewall **20** and bottom **21,** the preform **1** has an outer surface **22** and an inner surface **23.**

In a plane **P** perpendicular to the main axis **Z** and intersecting the bottom **21:**
- **O** refers to an origin point at the intersection of plane **P** and main axis **Z,**
- **X** refers to a fixed arbitrary origin axis intersecting main axis **Z** at **O,**
- **M** refers to a point located on the outer surface of the bottom **21,**
- **R** refers to the distance between **O** and **M,** equal to the length of segment [OM].

In plane **P,** point **M** may be completely defined in polar coordinates by:
- its distance **R** to the main axis **Z,**
- the angle noted θ between segment [OM] and origin axis **X.**

At any point **M,** the preform has a thickness **T** which is defined as the distance between the outer surface **22** and inner surface **23** measured along a line passing through point M and perpendicular to a plane tangent to the outer surface **22** at point M.

In an ordinary preform, thickness **T** is constant whichever θ. In most known preforms, thickness **T** is also constant in any plane **P.**

In the present invention however, the bottom **21** has a thickness **T** which varies at least locally around the main axis **Z.** In other words, there exists at least one plane **P** in which thickness **T** varies with θ.

On the resulting container **2,** the diaphragm **11** has a mechanical resistance which varies around the main axis **Z,** whereby inversion of the diaphragm **11** is facilitated, as will be explained in further details hereinafter.

In the depicted example, the bottom **21** has a thinner zone **24** located within a limited angular sector of angle **A,** around the main axis **Z.**

The adjective "thinner" means that, in this zone **24,** the average thickness **T** of the preform bottom **21** is lower than outside this zone **24.**

In one embodiment, the thinner zone **24** may be obtained by a groove formed within the inner surface **23.**

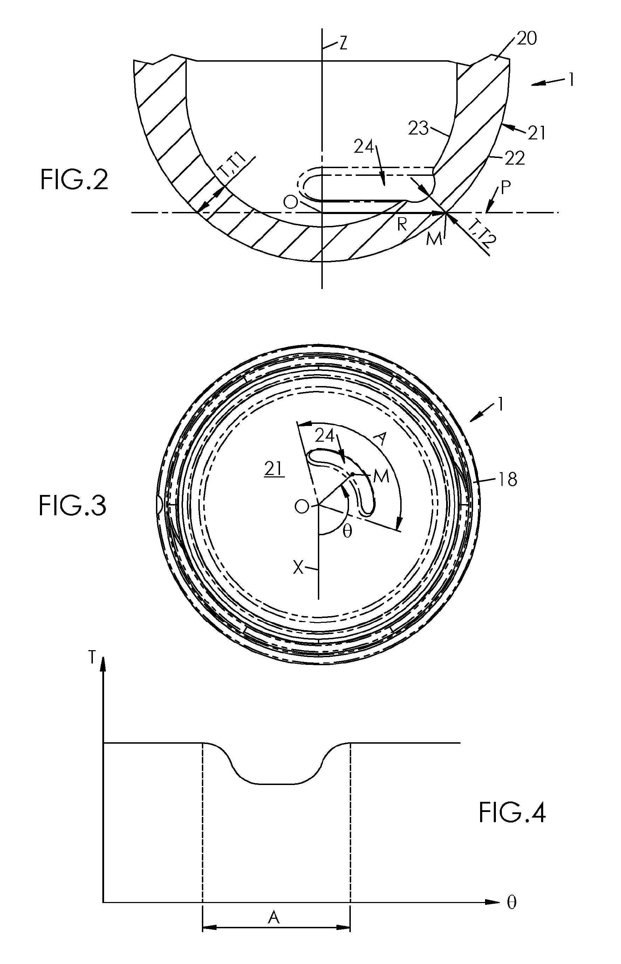

The outer contour of the thinner zone **24** may have any shape. In the depicted example, the contour of the thinner zone **24** has the general shape of a bean, as shown on **FIG.3****.** In other words, the thinner zone **24** extends substantially along an arc of a circle having its center on the main axis **Z.**

The angular sector has an angle **A** comprised e.g. between 45° and 180°, and more preferably between 90° and 150°. In the depicted example, angle **A** is of about 100°.

Using the preceding definition of the thickness **T, T1** is the thickness of the bottom **21** outside the thinner zone **24,** whereas **T2** is the minimum thickness of the bottom **21** inside the thinner zone **24.** **FIG.4** shows variation of thickness **T** of the preform bottom **21** along a circle of radius **R** located on the outer surface **22** and aligned with the thinner zone **24,** as depicted on **FIG.2. FIG.4** shows that the thickness **T** varies continuously (instead of abruptly) from outside the thinner zone **24** to inside the thinner zone **24,** in order to facilitate removal of the preform **1** from its mould.

**T2** is preferably chosen such that **T2 ≤** 0.9·**T1**.

**T2** is also preferably chosen such that **T2** ≥ 0.6·**T1**.

In order to be properly transferred onto the diaphragm **11** of the subsequent container **2** (as shown by the arrow on **FIG.5**), the thinner zone **24** preferably extends at substantially equal distance between the main axis **Z** and the junction between the sidewall **20** and the bottom **21,** when measured in a curvilinear manner along a meridian of the bottom **21.**

Should this distance be too low, would the thinner zone **24** transfer close to the inner edge **16,** possibly to the pushup **17.** Should on the contrary the distance be too high, would the thinner zone **24** transfer close to the outer edge **15,** possibly to the standing ring **10.** In either case, inversion of the diaphragm would not be facilitated and the whole base **9** of the container **2** would be weakened.

The thinner zone **24** results on the diaphragm **11** in an initiator area **25** of less mechanical resistance and which, during inversion by means e.g. of a pusher **26** (shown in dotted lines on FIG.7), is distorted first, before distortion spreads from the initiator area **25** to the whole diaphragm **11** around the main axis **Z,** whereby inversion of the diaphragm **11** is facilitated.

## Claims

1. Preform **(1)** made of a plastic material for the manufacturing of a container **(2)** by blow molding or stretch-blow molding, said preform **(1)** comprising a sidewall **(20)** extending along a main axis **(Z),** an open neck **(4)** and a substantially hemispherical closed bottom **(21), characterized in that** the bottom **(21)** has a thickness **(T)** which varies at least locally around the main axis **(Z).**

2. Preform **(1)** according to claim 1, wherein the bottom includes a thinner zone **(24)** located within a limited angular sector around the main axis **(Z).**

3. Preform **(1)** according to claim 2, wherein the angular sector has an angle **(A)** comprised between 45° and 180°.

4. Preform **(1)** according to claim 3, wherein the angular sector has an angle **(A)** comprised between 90° and 150°.

5. Preform **(1)** according to any of claims 2-4, that has on the bottom **(21),** outside the thinner zone **(24),** a thickness T1 and, in the thinner zone, a minimum thickness T2 such that T2 ≤ 0.9·T1.

6. Preform **(1)** according to any of claims 2-5, wherein the minimum thickness T2 in the thinner zone is such that T2 ≥ 0.6·T1.

7. Preform **(1)** according to any of claims 2-6, wherein the thinner zone **(24)** extends substantially along an arc of a circle having its center on the main axis **(Z).**

8. Preform **(1)** according to any of claims 2-7, wherein the thinner zone **(24)** extends at substantially equal distance between the main axis **(Z)** and the junction between the sidewall **(20)** and the bottom **(21),** when measured in a curvilinear manner along a meridian of the bottom **(21).**

## Amended claims

### Amended claims in accordance with Rule 137(2) EPC.

1. Preform **(1**) made of a plastic material for the manufacturing of a container **(2)** by blow molding or stretch-blow molding, said preform **(1)** comprising a sidewall **(20)** extending along a main axis **(Z),** an open neck **(4)** and a substantially hemispherical closed bottom **(21), characterized in that** the bottom **(21)** has a thickness **(T)** which varies at least locally around the main axis **(Z),** the bottom **(21)** including a thinner zone **(24)** located within a limited angular sector around the main axis **(Z),** said thinner zone **(24)** being obtained by a groove formed within the inner surface **(23)** of the preform **(1).**

2. Preform **(1)** according to claim 1, wherein the angular sector has an angle **(A)** comprised between 45° and 180°.

3. Preform **(1)** according to claim 2, wherein the angular sector has an angle **(A)** comprised between 90° and 150°.

4. Preform **(1)** according to any of claims 1-3, that has on the bottom **(21),** outside the thinner zone **(24),** a thickness T1 and, in the thinner zone **(24),** a minimum thickness T2 such that T2 ≤ 0.9·T1.

5. Preform **(1)** according to any of claims 1-4, wherein the minimum thickness T2 in the thinner zone **(24)** is such that T2 ≥ 0.6·T1.

6. Preform **(1)** according to any of claims 1-5, wherein the thinner zone **(24)** extends substantially along an arc of a circle having its center on the main axis **(Z).**

7. Preform **(1)** according to any of claims 1-6, wherein the thinner zone **(24)** extends at substantially equal distance between the main axis **(Z)** and the junction between the sidewall **(20)** and the bottom **(21),** when measured in a curvilinear manner along a meridian of the bottom **(21).**
